Europäisches Patentamt

European Patent Office

Office européen des brevets

(11) Publication number: **0 062 956**

**B1**

# EUROPEAN PATENT SPECIFICATION

(45) Date of publication of patent specification: **17.07.85**

(51) Int. Cl.⁴: **F 21 V 21/32, F 16 M 11/12**

(21) Application number: **82200432.1**

(22) Date of filing: **08.04.82**

(54) **Supporting device.**

(30) Priority: **11.04.81 NL 8101790**

(43) Date of publication of application:
**20.10.82 Bulletin 82/42**

(45) Publication of the grant of the patent:
**17.07.85 Bulletin 85/29**

(84) Designated Contracting States:
**AT BE CH DE FR GB IT LI LU NL SE**

(56) References cited:
**BE-A- 483 690**
**DE-A-1 909 716**
**DE-A-2 840 314**
**FR-A-1 105 984**
**FR-A-2 184 263**
**FR-A-2 363 021**
**US-A-2 557 507**
**US-A-3 266 059**

(73) Proprietor: **Ansems, Henricus Josephus**
**Spoorwegstraat 14**
**NL-6828 AS Arnhem (NL)**

(72) Inventor: **Ansems, Henricus Josephus**
**Spoorwegstraat 14**
**NL-6828 AS Arnhem (NL)**

(74) Representative: **Noz, Franciscus Xaverius, Ir.**
**et al**
**Boschdijk 155**
**NL-5612 HB Eindhoven (NL)**

Courier Press, Leamington Spa, England.

## Description

The invention relates to a supporting device comprising various relatively turnable parts accommodating a biassed helically wound tensile spring fixed near its ends to the two outermost parts of said relatively turnable parts, whereby said parts can be turned with respect to one another, whilst in the spring is produced such a torsional tension that the parts will remain in any desired normal position of use relative to one another under the influence of said torsional tension.

From US—A—2.557.507 is known such supporting device made from three straight parts having either coupling beads or flanges, so that the various parts are joined by said beads or flanges in operative assembled relation in such a way that the various parts can be rotated with respect to each other about their longitudinal axes. Said straight parts are held together by two springs having opposite convolute pitch and working to hold the parts in adjusted position under twisting torque. Using various springs, beads and flanges gives a complicated structure, which cannot be assembled and disassembled in an easy way, whilst the outwardly protruding beads and flanges effect the appearance of the supporting device in an unfavourable way.

· Now according to the invention at least some of the turnable parts are curved or bent and between adjoining ends of said turnable parts coupling members are provided having their ends positioned within adjacent ends of two tubular turnable parts with said adjacent ends abutting a collar on said coupling members, whereby the outer diameter of the ends of the coupling members corresponds substantially with the inner diameter of said adjacent ends of said tubular parts and the outer diameter of said collar of the coupling members corresponds with the outer diameter of the tubular parts, whereby with torsional tension of a single spring and friction between the coupling members and tubular parts said relatively turnable parts will remain in any desired normal position of use.

By using the structure according to the invention the supporting device will have a simple structure and a smooth outer surface, whilst the surfaces of the coupling members and tubes where friction occurs are protected against dust and/or dirt, so that also after longer use a smooth adjusting of the various parts of the supporting device will be possible. By using thereby curved or bent parts, there are only needed a relatively small number of parts, whilst yet the free ends of the supporting device can be moved in a great number of different positions.

It is noted that from DE—A—1.909.716 is known a supporting device comprising a number of straight tubular parts and coupling members mounted between said tubular parts. Said coupling members have a spherical outer surface and the opposite ends of said coupling members are located in the ends of the tubular parts having a spherical inner surface.

Further the coupling member has been provided with a protruding collar for limiting the annular movement of the various parts with respect to each other.

Said supporting device does not have a smooth closed outer surface, whilst the surfaces of the coupling members which can come into contact with the inner surfaces of the tubular parts are not protected against dust or dirt.

Further from FR—A—1.105.984 is known a supporting device having various bent parts which can be adjusted with respect to each other. Near the coupling points between said adjustable parts have been provided friction means surrounding said ends of the tubular parts. Said friction means have been made from a number of discs which are held together by means of bolts extending through said discs. Further the various parts are held together by means of a rope accommodated into said parts and coupled to a spring arranged outside said parts. So the structure according to FR—A—1.105.984 is rather complicated and neither the friction means nor the spring are mounted in a protected position inside the tubular parts. Thereby said spring as well as said friction means form inconvenient protruding parts.

The invention will now be described more fully with reference to the accompanying sketch showing some component parts of an embodiment of a supporting construction at a distance from one another.

In the embodiment shown the supporting construction comprises a tubular part 1 having a straight portion and a quarter bend. To the righthand end of said tubular part can be fastened a member to be supported, for example, a lamp holder 2.

In the tubular part 1 is fixed the end of a helically wound tensile spring 3.

The supporting device furthermore comprises a tubular part 4 formed by a quarter bend and a tubular part 5 having a straight portion and an adjoined quarter bend. The supporting device is furthermore provided with a straight, tubular part 6, to the lower end of which is secured a supporting plate 7. In the tubing 6 is slidable in its direction of length a tubing 8 associated with the supporting member and to the lower end of the tubing 8 is fastened a supporting plate 9. Beneath the supporting plate 9 is fastened a tubing 10 so that the centre line of this tubing 10 coincides with the centre line of the tubing 8.

The lower end of the tubing 5 can be coupled with the tubing 6 with the aid of a tie piece 11 formed by a tubing 12 provided between its ends with a thickened, annular portion 13. This annular portion 13 has two tapped holes for receiving guard screws 14.

Into the lower end of the tubing 10 can be inserted a coupling piece 15, which is provided at its lower end with a thickened, annular portion 16 also having two tapped holes for receiving guard screws 17. Between the ends of the tubing 4 and the tubing 5 to be joined to one another is arranged a coupling piece 18 having near its middle a thickened, annular portion 19 so that the ends of said coupling piece can be inserted into the ends of the tubings 5 and 4, the annular portion thus being locked between the ends of the tubings 4 and 5.

A similar coupling piece 20 is used for the disposition on the ends of the tubings 1 and 4 to be joined to one another.

When mounting the supporting member described above first the coupling piece 20 is slipped onto the spring, then the tubing 4, the coupling piece 18, the tubing 5 and the coupling piece 11 in a manner such that the various parts of the supporting member, through which the spring 3 is slid, are rigidly joined to one another. Subsequently the spring 3 is firmly stretched and then fixed in the coupling piece 11 with the aid of the guard screws 14. It will be obvious that the various parts 1, 20, 4, 18, 5 and 11 are firmly drawn to one another by the spring.

The remaining part of the spring is passed through the parts 6, 8 and 10 of the supporting member, said remaining part of the spring being also biassed and finally fixed to the coupling piece 15 with the aid of the guard screws 17. It will be obvious that as a result the supporting plate 9 tends to move towards the supporting plate 7 by the action of the spring tension produced in the portion of the tensile spring located between the guard screws 14 and the guard screws 17. The arrangement may be such that during mounting and generating the tensile force in the last-mentioned portion of the tensile spring 3 the plates 7 and 9 come into contact with one another, whereas an alternative resides in that with the aid of stop members (not shown) it can be ensured that the supporting plates 7 and 9 are spaced apart by a minimum distance.

By correct choice of the dimensions of the spring and, as the case may be, by generating a given torsional stress in the spring by an initial turn of the various parts relative to one another after the spring is fastened, a sufficiently high friction force can be produced between the various adjoining parts of the supporting member and an adequate torsional force can be generated in the spring to ensure that subsequent to a turn of one or more of the parts 1, 4, 5 and 6 relative to one another said parts remain in the set position without the need for addiitonal locking members or the like. Moreover, the supporting member can be clamped to a table top or the like with the aid of the supporting plates 7 and 9.

By building up the supporting member with the use of curved or sharply bent parts a great number of different positions can be set for the supported member, for example, a lamp holder 2 or the like.

Instead of using a single spring fixed at several spots a plurality of registering springs may, as an alternative, be employed.

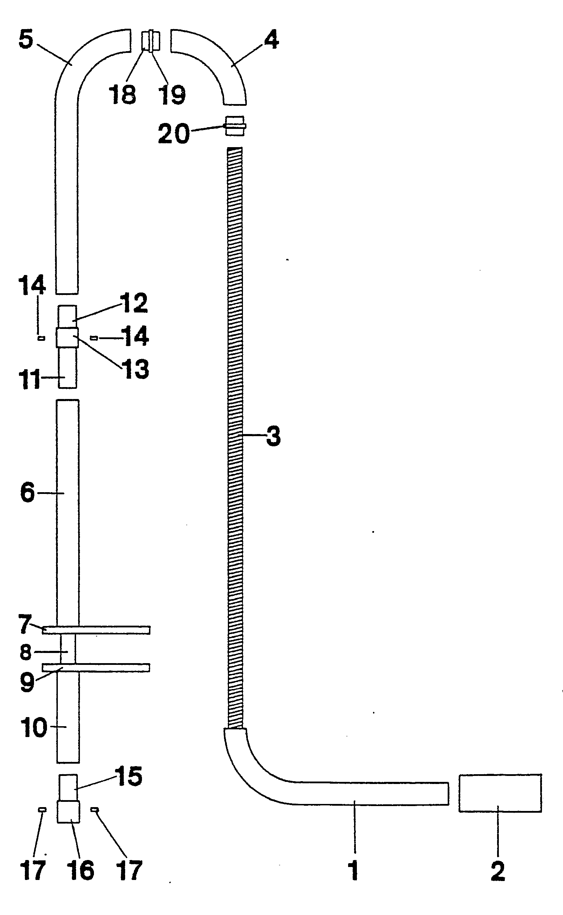

**Claims**

1. A supporting device comprising various relatively turnable parts (1, 4, 5, 6, 8, 10, 11, 15) accommodating a biassed helically wound tensile spring (3) fixed near its ends to the two outermost parts (1, 15) of said relatively turnable parts, whereby said parts (1, 4, 5, 6, 8, 10, 11, 15) can be turned with respect to one another, whilst in the spring (3) is produced such a torsional tension that the parts will remain in any desired normal position of use relative to one another under the influence of said torsional tension, characterized in that at least some of the turnable parts (1, 4, 5) are curved or bent and between adjoining ends of said curved or bent turnable parts coupling members (18, 20) are provided having their ends positioned within adjacent ends of two tubular turnable parts with said adjacent ends abutting a collar (19) on said coupling members, whereby the outer diameter of the ends of the coupling members corresponds substantially with the inner diameter of said adjacent ends of said tubular parts (1, 4, 5) and the outer diameter of said collar (19) of the coupling members corresponds with the outer diameter of the tubular parts (1, 4, 5) whereby with torsional tension of a single spring (3) and friction between the coupling members and tubular parts, said relatively turnable parts will remain in any desired normal position of use.

2. A supporting device as claimed in claim 1, characterized in that at a point between its fixed ends the spring (3) is fixed to one of said parts (11) arranged between said two outermost parts (1, 15) and between the end of the spring (3) fixed to one (15) of said two outermost parts (1, 15) and the fixed point of the spring (3) located between the ends of the spring, there are located two of said parts (6, 8, 10) which are telescopically slidable with respect to each other in the longitudinal direction of the spring, each of said last cited two parts (6, 8, 10) having a protruding ear (7, 9) fixed to the respective part (6, 8, 10) in such a way that the ears which are situated opposite one another can be moved against the bias of the spring in a direction away from each other.

**Revendications**

1. Dispositif de support comprenant diverses parties pouvant tourner les unes par rapport aux autres (1, 4, 5, 6, 8, 10, 11, 15) recevant un ressort de rappel en tension enroulé en hélice (3) fixé près de ses extrémités aux deux parties extrêmes (1, 15) desdites parties pouvant tourner les unes par rapport aux autres tandis que dans le ressort (3) est produite une tension de torsion telle que les parties restent dans toute position normale désirée d'utilisation les unes par rapport aux autres sous l'influence de la dite tension de torsion, caractérisé en ce qu'au moins quelques-unes des parties pouvant tourner (1, 4, 5) sont incurvées ou arquées et qu'entre les extrémités jointes desdites parties incurvées ou arquées pouvant tourner sont prévus des organes d'accouplement (18, 20) ayant leurs extrémités placées à l'intérieur des extrémités adjacentes de deux parties tubulaires pouvant tourner dont les extrémités adjacentes butent contre une collerette (19) sur lesdits organes d'accouplement, le diamètre extérieur des extrémités des organes d'accouplement correspondant pratiquement au diamètre intérieur desdites extrémités adjacentes desdites parties tubulaires (1, 4, 5) et le diamètre extérieur de ladite collerette (19) des organes d'accouplement correspondant au diamètre extérieur des parties tubulaires (1, 4, 5) de sorte que, sous l'action de la tension de torsion d'un seul ressort (3) et du frottement entre les organes d'accouplement et les parties tubulaires, lesdites parties pouvant tourner les unes par rapport aux autres restent dans toute position normale désirée d'utilisation.

2. Dispositif de support selon la revendication 1, caractérisé en ce qu'en un point entre ses extrémités fixées le ressort (3) est fixé à l'une desdites parties (11) montées entre les dites deux parties extrêmes (1, 15) et en ce qu'entre l'extrémité du ressort (3) fixée à l'une (15) desdites deux parties extrêmes et le point fixé du ressort (3) placé entre les extrémités de ce ressort, il y a deux desdites parties (6, 8, 10) qui peuvent coulisser télescopiquement chacune par rapport à l'autre dans la direction longitudinale du ressort, chacune des dites deux parties (6, 8, 10) citées en dernier ayant une oreille saillante (7, 9) fixée à la partie respective (6, 8, 10) de telle façon que les oreilles qui sont opposées l'une à l'autre puissent être déplacées contre le rappel du ressort dans un sens les écartant l'une de l'autre.

**Patentansprüche**

1. Haltevorrichtung mit mehreren relativ drehbaren Teilen (1, 4, 5, 6, 8, 10, 11, 15), die eine vorgespannte, schraubenförmig aufgewundene Zugfeder (3) aufnehmen, die in der Nähe ihrer Enden an den beiden äußersten Teilen (1, 15) der relativ drehbaren Teile befestigt ist, wodurch die Teile (1, 4, 5, 6, 8, 10, 11, 15) bezüglich einander gedreht werden können, während in der Feder (3) eine solche Torsionsspannung erzeugt wird, daß die Teile in jeder beliebigen gewünschten normalen Gebrauchsposition bezüglich einander unter der Einwirkung der Torsionsspannung bleiben, dadurch gekennzeichnet, daß zumindest einige der drehbaren Teile (1, 4, 5) gekrümmt oder gebogen sind und zwischen angrenzenden Enden der gekrümmten oder gebogenen drehbaren Teile Kopplungsglieder (18, 20) vorgesehen sind, deren Enden innerhalb angrenzender Enden zweier röhrenförmiger drehbarer Teile positioniert sind, wobei die angrenzenden Enden an einen Kragen (19) auf den Kopplungsglieder stoßen, wodurch der Außendurchmesser der Enden der Kopplungsglieder im wesentlichen dem Innendurchmesser der angrenzenden Enden der röhrenförmigen Teile (1, 4, 5) entspricht und der Außendurchmesser des des Kragens (19) der Kopplungsglieder dem Außendurchmesser der röhrenförmigen Teile (1, 4, 5) entspricht, wodurch die relativ drehbaren Teile mit der Torsionsspannung einer einzigen Feder (3) und Reibung zwischen den Kopplungsgliedern und röhrenförmigen Teilen in jeder beliebigen gewünschten normalen Gebrauchsposition bleiben.

2. Haltevorrichtung nach Anspruch 1, dadurch gekennzeichnet, daß die Feder (3) an einem Punkt zwischen ihren befestigten Enden an einem der Teile (11) befestigt ist, der zwischen den beiden äußersten Teilen (1, 15) angeordnet ist, und zwischen dem Ende der Feder (3), das an einem (15) der beiden äußersten Teile (1, 15) befestigt ist, und dem befestigten, zwischen den Enden der Feder (3) angeordneten Punkt der Feder (3) zwei der Teile (6, 8, 10) angeordnet sind, die teleskopisch bezüglich einander in der Längsrichtung der Feder verschiebbar sind, wobei jeder der zuletzt genannten zwei Teile (6, 8, 10) ein vorstehendes Ohr (7, 9) aufweist, das am entsprechenden Teil (6, 8, 10) auf solche Weise befestigt ist, daß die Ohren, die einander gegenüber gelegen sind, gegen die Vorspannung der Feder in einer Richtung voneinander fort bewegt werden können.

0 062 956